# DEMANDE DE BREVET EUROPEEN

(11) **EP 1 616 686 A1**
(43) Date de publication de la demande: **18.01.2006**
(21) Numéro de dépôt: 05291529.5
(22) Date de dépôt: 18.07.2005
(51) Int. Cl.: B29C 45/76, B29C 45/80, B29C 45/77, B29C 45/78

(54) **Dispositif et procédé de régulation de la force de fermeture d'un moule d'injection**

(30) Priorité: 16.07.2004 FR 0407940
(71) Demandeur: COMPAGNIE PLASTIC OMNIUM, 69007 Lyon (FR)
(72) Inventeur: Gille, Denis, 01810 Bellignat (FR); Agassant, Antoine, 69003 Lyon (FR); Demule Thenon, Christophe, 01150 Chazey Sur Ain (FR)
(74) Mandataire: de la Bigne, Guillaume Michel Marie

(57) **Abrégé**

La présente invention concerne un dispositif (22, 24, 26, 28) de régulation de la force de fermeture d'un moule d'injection, le moule comportant deux parties (18, 20) mobiles l'une par rapport à l'autre et étant fermé lorsque ces deux parties (18, 20) sont accolées, le dispositif comportant des moyens de fermeture (22) exerçant une force de fermeture sur le moule.

Ce dispositif est caractérisé par le fait qu'il comporte en outre :
- au moins un capteur (26, 28) sensible à une grandeur caractéristique d'une tendance à l'ouverture du moule; et
- des moyens de contrôle (24) des moyens de fermeture (22) du moule, reliés au capteur (26, 28) et agencés de manière à accroître la force de fermeture lorsque le capteur (26, 28) indique que les sollicitations subies par le moule augmentent.

## Description

La présente invention concerne un dispositif de régulation de la force de fermeture d'un moule d'injection.

Généralement, au cours du procédé d'injection pour la fabrication d'une pièce en matière plastique, on utilise un moule en deux parties, dont l'une est fixe et l'autre mobile, de façon à ouvrir ou fermer le moule.

On sait que la force minimum à exercer sur la partie mobile pour maintenir le moule fermé n'est pas constante au cours du cycle d'injection de matière plastique. Par exemple, cette force est relativement faible au début de l'injection, quand la matière plastique ne remplit pas encore tout le moule, alors qu'elle doit être plus importante pour maintenir le moule fermé à la fin du remplissage, lorsque la matière plastique est comprimée contre toutes les parois du moule.

En vue d'économiser de l'énergie et d'éviter l'usure rapide du moule, il est intéressant, plutôt que d'exercer tout au long du cycle une force constante et importante sur le moule, d'appliquer à chaque instant juste la force suffisante pour maintenir le moule fermé.

On connaît à cet effet dans l'état de la technique, en particulier dans US 5 756 019, un dispositif de régulation de cette force de fermeture. Ce dispositif consiste à calculer, à partir du taux de remplissage de la vis d'injection, de la pression exercée sur cette vis, de la surface de la pièce moulée et d'un facteur de sécurité, la valeur de la force à appliquer sur le moule. Ainsi, la valeur de cette force varie au cours du cycle, tout en étant suffisante pour maintenir le moule fermé à tout moment.

Cependant, lorsque la force de fermeture est déterminée par calcul, sa valeur varie en fonction de plusieurs paramètres liés au fonctionnement de la machine d'injection, ce qui pose deux problèmes.

D'une part, le calcul correspond à une valeur théorique du comportement de la matière sur le moule, puisque les paramètres sont mesurés en amont du remplissage du moule et ne reflètent pas exactement les interactions entre la matière plastique et le moule. Ainsi il peut arriver, dans le cas d'une infiltration au niveau du moule, que les paramètres laissent croire que l'injection se déroule normalement et donc que la force appliquée pour la fermeture du moule augmente alors que la cavité n'est pas encore remplie.

D'autre part, un tel calcul nécessite d'installer plusieurs capteurs en divers endroits de la machine, de les relier à un calculateur, relié lui-même au dispositif de fermeture du moule. Cette multiplicité de paramètres complique le dispositif, et augmente les imprécisions, et donc les marges d'erreur à ajouter au facteur de sécurité. En outre, un tel calcul devient encore plus compliqué dans le cas d'une injection séquentielle.

La présente invention vise à remédier à ces inconvénients en proposant un dispositif de régulation qui exerce une force de fermeture dont la valeur n'est pas obtenue par un calcul théorique mais répond exactement à l'action de la matière plastique sur le moule, tout en nécessitant une installation relativement simple.

A cet effet, la présente invention a pour objet un dispositif de régulation de la force de fermeture d'un moule d'injection, le moule comportant deux parties mobiles l'une par rapport à l'autre et étant fermé lorsque ces deux parties sont accolées, le dispositif comportant des moyens de fermeture exerçant une force de fermeture sur le moule, caractérisé en ce qu'il comporte en outre :
- au moins un capteur sensible à une grandeur caractéristique d'une tendance à l'ouverture du moule ; et
- des moyens de contrôle des moyens de fermeture du moule, reliés au capteur et agencés de manière à accroître la force de fermeture lorsque le capteur indique une tendance à l'ouverture du moule.

Ainsi, lorsque la matière plastique est injectée et qu'elle exerce sur le moule une force qui tend à l'ouvrir, le capteur l'indique et les moyens de contrôle commandent les moyens de fermeture, par exemple des vérins, pour qu'ils exercent sur le moule une force supérieure, qui s'oppose ainsi à cette force d'ouverture, de façon à maintenir le moule fermé. Cette force exercée par les moyens de fermeture croît en temps réel et correspond à la force juste nécessaire pour maintenir le moule fermé.

Par conséquent le facteur de sécurité ne doit plus être aussi important qu'auparavant et l'on économise davantage d'énergie.

En outre, le dispositif de régulation peut sans difficulté être utilisé au cours d'une injection séquentielle.

Selon un mode de réalisation préféré, le capteur est agencé sur le moule, ce qui simplifie l'installation du dispositif de régulation.

Un autre avantage apporté par l'invention est que le dispositif de régulation ne dépend pas de la surface de la pièce en matière plastique fabriquée, ce qui évite d'avoir à modifier les données de la machine d'injection lors de la fabrication de pièces différentes.

De préférence, les moyens de contrôle des moyens de fermeture sont agencés de manière à réduire la force de fermeture lorsque le capteur indique une diminution de la tendance à l'ouverture du moule.

Selon un mode de réalisation préféré de l'invention, la grandeur caractéristique mesurée par le capteur est une contrainte subie par le moule. Ainsi, on peut utiliser des jauges de contraintes connues, dont l'utilisation est facile et la précision relativement fine. Selon un autre mode de réalisation, le capteur mesure le déplacement d'une des parties du moule. Selon un autre mode de réalisation, la grandeur mesurée est la pression à l'intérieur du moule. Selon encore un autre mode de réalisation, le capteur mesure un flux thermique dans le moule, ce qui permet de connaître notamment la vitesse de remplissage du moule.

La présente invention a également pour objet un procédé de régulation de la force de fermeture d'un moule au cours de l'injection de matière plastique dans ce moule, le moule comportant deux parties mobiles l'une par rapport à l'autre et étant fermé lorsque ces deux parties sont accolées, comportant les étapes suivantes :
- on mesure une grandeur caractéristique d'une tendance à l'ouverture du moule ;
- on contrôle la fermeture du moule de façon à exercer une force de fermeture du moule plus grande lorsqu'on détecte une tendance à l'ouverture du moule.

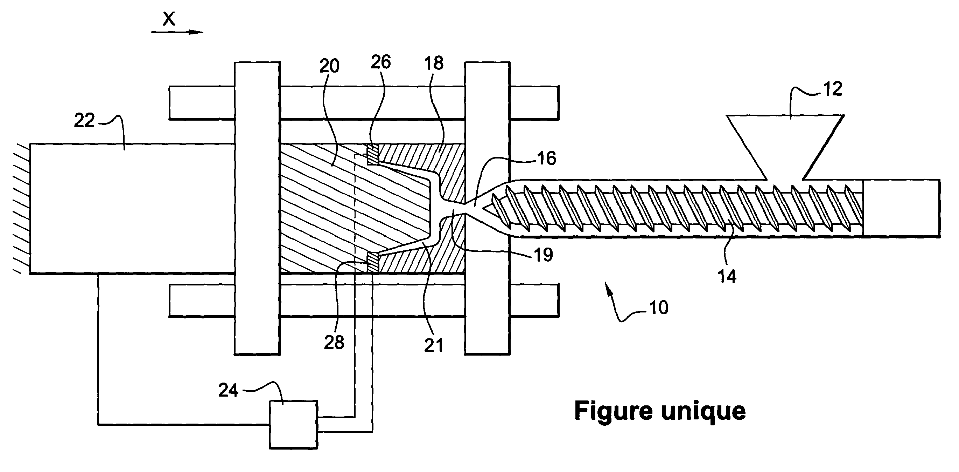

L'invention sera mieux comprise à la lecture de la description qui va suivre, donnée uniquement à titre d'exemple et faite en se référant à la figure unique représentant un dispositif de régulation selon un mode de réalisation de l'invention.

Une vis d'injection 10 injecte de la matière plastique à l'état visqueux dans un canal d'injection 16 d'un moule d'injection composé de deux parties 18, 20. La partie 18 est fixe et demeure immobile au cours de l'injection, tandis que la partie 20 est mobile dans la direction X. Le moule peut ainsi prendre une position fermée, dans laquelle les parties 18 et 20 sont accolées, et une position ouverte dans laquelle les parties 18 et 20 sont espacées.

Lorsque les parties 18, 20 du moule sont accolées, elles définissent une cavité 21, dont la forme est celle de la pièce en matière plastique que l'on souhaite mouler. Cette cavité 21 est agencée pour recevoir de la matière plastique par le canal 16.

La partie mobile 20 peut se déplacer dans la direction X sous l'action d'une force exercée par des moyens de fermeture 22, qui comprennent un piston et sont commandés par des moyens de contrôle 24, comprenant un boîtier électronique.

Les moyens de contrôle 24 sont par ailleurs reliés à des capteurs constitués par des jauges de contrainte 26, 28 agencées entre les parties 18 et 20 du moule, aptes à mesurer la contrainte subie par le moule dans son plan de joint selon la direction de fermeture X.

Cette contrainte résulte des actions antagonistes des moyens de fermeture 22, qui tendent à accroître ladite contrainte, et de la matière plastique injectée dans la cavité 21, qui tend à la réduire.

En l'absence de matière sous pression dans le moule, la contrainte mesurée est directement la traduction de la force de fermeture qui s'exerce sur la surface du plan de joint.

Lorsque la matière sous pression remplit le moule, la surface du plan de joint est partiellement soulagée de l'action de la force de fermeture et la contrainte mesurée diminue.

Une annulation de la contrainte traduit une ouverture imminente du moule, c'est-à-dire une tendance avérée à l'ouverture du moule, car la contrainte s'annule lorsque les deux faces en regard des deux parties 18 et 20 du moule, qui constituent le plan de joint, sont sur le point de se séparer.

La grandeur caractéristique d'une tendance à l'ouverture du moule est donc, dans le mode de réalisation décrit, une valeur de contrainte inférieure à un seuil prédéterminé.

Pendant l'injection, les jauges 26, 28 mesurent en permanence la contrainte et détectent lorsque sa valeur devient inférieure à ce seuil, auquel cas elles émettent un signal de tendance à l'ouverture du moule.

Les moyens de contrôle agissent en conséquence sur les moyens de fermeture pour augmenter la force de fermeture jusqu'à ce que les jauges constatent un accroissement suffisant de la contrainte.

Dans une variante, les jauges émettent un signal non pas seulement en cas de franchissement du seuil prédéterminé, mais en permanence, le signal étant porteur d'une information relative à la valeur de la contrainte mesurée. Ainsi, les moyens de contrôle peuvent réagir proportionnellement aux variations de la contrainte, ce qui peut procurer une réaction plus rapide des moyens de fermeture.

Lorsque l'injection de matière plastique dans le moule est terminée et que la matière plastique se solidifie, si la contrainte mesurée par les jauges 26, 28 augmente, les moyens de contrôle 24 commandent les moyens de fermeture 22 pour exercer une force de fermeture moins importante sur le moule.

Ainsi, avec le dispositif de régulation constitué par les capteurs 26, 28, les moyens de contrôle 24 et les moyens de fermeture 22, la force exercée sur le moule pour le fermer compense la force d'ouverture, exercée par la matière plastique sur le moule pour l'ouvrir, de façon à maintenir le moule fermé. La quantité d'énergie utilisée est optimisée puisqu'elle est minimale à tout moment.

Selon d'autres modes de réalisation, les jauges de contrainte 26, 28 sont remplacées par d'autres types de capteurs, aptes à mesurer la pression à l'intérieur du moule, ou encore de capteurs du déplacement d'une des parties du moule, autres grandeurs caractéristiques d'une tendance à l'ouverture du moule.

Il est bien entendu que les modes de réalisation qui viennent d'être décrits ne présentent aucun caractère limitatif et qu'ils pourront recevoir toutes modifications désirables sans sortir pour cela du cadre de l'invention.

## Revendications

1. Dispositif (22, 24, 26, 28) de régulation de la force de fermeture d'un moule d'injection, le moule comportant deux parties (18, 20) mobiles l'une par rapport à l'autre et étant fermé lorsque ces deux parties (18, 20) sont accolées, le dispositif comportant des moyens de fermeture (22) exerçant une force de fermeture sur le moule, **caractérisé en ce qu'**il comporte en outre :
- au moins un capteur (26, 28) sensible à une grandeur caractéristique d'une tendance à l'ouverture du moule, ce capteur mesurant une contrainte subie par le moule ; et
- des moyens de contrôle (24) des moyens de fermeture (22) du moule, reliés au capteur (26, 28) et agencés de manière à accroître la force de fermeture lorsque le capteur (26, 28) indique une tendance à l'ouverture du moule.

2. Dispositif selon la revendication 1, utilisé au cours d'une injection séquentielle.

3. Dispositif selon la revendication 1 ou 2, dans lequel le capteur (26, 28) est agencé sur le moule.

4. Dispositif selon l'une quelconque des revendications 1 à 3, dans lequel les moyens de contrôle (24) des moyens de fermeture (24) sont agencés de manière à réduire la force de fermeture lorsque le capteur (26, 28) indique une diminution de la tendance à l'ouverture du moule.

5. Dispositif selon l'une quelconque des revendications 1 à 4, comportant un capteur mesurant le déplacement d'une des parties du moule.

6. Dispositif selon l'une quelconque des revendications 1 à 5, comportant un capteur mesurant la pression à l'intérieur du moule.

7. Dispositif selon l'une quelconque des revendications 1 à 6, comportant un capteur mesurant un flux thermique dans le moule.

8. Procédé de régulation de la force de fermeture d'un moule au cours de l'injection de matière plastique dans ce moule, le moule comportant deux parties mobiles (18, 20) l'une par rapport à l'autre et étant fermé lorsque ces deux parties sont accolées, comportant les étapes suivantes :
- on détecte une grandeur caractéristique d'une tendance à l'ouverture du moule, cette grandeur étant une contrainte subie par le moule ;
- on contrôle la fermeture du moule de façon à exercer une force de fermeture du moule plus grande lorsqu'on détecte une tendance à l'ouverture du moule.
